# FASCICULE DE BREVET EUROPEEN

(11) **EP 0 735 837 B1**
(45) Date de publication et mention de la délivrance du brevet: **12.11.2003**
(21) Numéro de dépôt: 95903828.2
(22) Date de dépôt: 13.12.1994
(51) Int. Cl.: A47J 31/40

(54) **MACHINE AUTOMATIQUE POUR LA PREPARATION D'INFUSIONS DE BOISSONS CHAUDES**
GETRÄNKEAUTOMAT ZUR BEREITUNG VON BRÜHGETRÄNKEN
AUTOMATIC MACHINE FOR THE PREPARATION OF HOT BEVERAGE INFUSIONS

(30) Priorité: 20.12.1993 FR 9315677; 10.08.1994 FR 9410087
(43) Date de publication de la demande: 09.10.1996
(73) Titulaire: COMPAGNIE MEDITERRANEENNE DES CAFES S.A., 06510 Carros Cédex (FR)
(72) Inventeur: BLANC, Jean-Pierre, F-06510 Gattières (FR); FERRIER, Christian, F-06340 La Trinité (FR)
(74) Mandataire: Hautier, Jean-Louis
(86) Numéro de dépôt international: FR9401455
(87) Numéro de publication internationale: WO95017121

(56) Documents cités:
- EP-A- 0 041 931
- EP-A- 0 093 366
- EP-A- 0 208 092
- DE-A- 2 435 436
- FR-A- 1 216 342
- FR-A- 1 575 181
- US-A- 2 952 202
- US-A- 3 143 955
- US-A- 3 269 298

## Description

La présente invention concerne une machine automatique permettant la préparation d'infusions de boissons chaudes telles que du café.

Cette machine comprend un groupe qui est formé d'un piston fixe et d'un corps cylindrique mobile, le groupe étant placé en vis-à-vis d'une chaudière.

La chaudière, d'une part, le piston fixe et le corps cylindrique mobile, d'autre part, sont séparés par une zone où sont positionnés les moyens de réception, de maintien en position et d'éjection des conditionnements.

De telles machines sont déjà décrites dans l'état de la technique.

*Le document US-A-3.143.955 propose une machine pour la fabrication de breuvages qui comporte essentiellement des mécanismes, faisant office de moyens de réception, de maintien en position et d'éjection, tels qu'un tambour où est enroulé un ruban comportant longitudinalement une pluralité de conditionnements de produits à infuser.*

La différence avec la présente invention réside dans la structure des différents moyens ainsi que dans l'utilisation d'un ruban de conditionnements et non de conditionnements individuels. L'inconvénient essentiel du ruban consiste dans la présence dans la machine, à la fois de conditionnements usagés et neufs, ce qui peut entraîner des problèmes d'hygiène.

*Le document DE-A-2.435.436 a trait à une machine automatique pour la préparation d'infusions de café ou de thé. Le mouvement entre les deux parties principales de la machine, destinées à être rapprochées pour permettre la percolation, est assuré par une came rotative à l'encontre de laquelle est monté un boîtier. Ce boîtier, à l'instar de l'invention, propose des moyens de mouillage de la substance à infuser.*

Néanmoins, ces moyens de mouillage comporte beaucoup plus de pièces. La fabrication en est donc plus onéreuse et l'efficacité du disque de caoutchouc venant obturer les perforations du tamis, peut être altérée par la chaleur due à la percolation.

*Le document EP-A-0.093.366 concerne une machine à café dont les caractéristiques techniques sont semblables à l'invention pour ce qui concerne l'ensemble corps cylindrique mobile-piston fixe avec chaudière et au document US-A-3.143.955 pour la nature des conditionnements, qui se présente sous la forme d'un ruban*.

Contrairement à ces documents, l'invention utilise, dans un groupe d'extraction, un produit à infuser qui est utilisé avec des conditionnements individuels et dont le nettoyage ainsi que l'usage du groupe sont facilités. L'évacuation du conditionnement et du produit à infuser est automatique.

A cet effet, la présente invention propose une machine automatique pour la préparation d'infusions de boissons chaudes tel que du café, qui comprend un groupe formé d'un corps placé en regard d'une chaudière, destinés à être rapprochés l'un de l'autre pour former une chambre d'infusion, caractérisé par le fait qu'elle comporte, entre le corps et la chaudière, au niveau de la chambre d'infusion :
- des moyens de réception et d'éjection automatique d'un conditionnement individuel contenant le produit à infuser, qui sont constitués d'au moins un élément escamotable, déployé en position sensiblement sous la chambre d'infusion, destiné à immobiliser temporairement ledit conditionnement entre le corps et la chaudière, lors de la réception et escamoté par rapport au passage du conditionnement individuel, pour permettre l'éjection par simple gravité du conditionnement individuel, le déplacement du conditionnement individuel étant perpendiculaire à l'axe de la machine, et
- des moyens de maintien en position du conditionnement qui comportent deux rainures latérales audit conditionnement et sensiblement verticales, dans lesquelles ledit conditionnement coulisse et est maintenu en position verticale lorsque les moyens de réception sont présents.

D'une part, la chambre d'infusion est constituée par deux demi-logements, l'un porté par une face du corps, l'autre porté par une face de la chaudière, ces deux faces étant en regard l'une de l'autre ; ladite chambre d'infusion est formée lorsque les deux demi-slogements se jouxtent. D'autre part, les moyens d'étanchéité sont portés par le conditionnement individuel du produit à infuser de sorte que, lorsque la chambre d'infusion est formée, le conditionnement individuel s'insère entre les deux demi-logements.

La machine automatique utilise des conditionnements de produits à infuser, de type dose individuelle conditionnée, formée d'une partie centrale souple renfermant le produit à infuser et d'une partie périphérique formant rebord de scellement et de rigidification ; elle est caractérisée par le fait que la partie périphérique dudit conditionnement fait office de moyens d'étanchéité entre le demi-logement du corps et le demi-logement de la chaudière lorsque ceux-ci se rapprochent.

Le corps et la chaudière sont munis chacun d'une plaque faisant office de filtre au niveau de leurs demi-logements respectifs ; ces filtres ont une forme qui permet d'insérer partiellement ou en totalité la partie centrale du conditionnement, lorsque la chambre d'infusion est formée.

La machine automatique comporte des moyens de mouillage situés au niveau du corps vers le demi-logement qui sont formés par le filtre du demi-logement du corps, et par une membrane-clapet placée dans l'espace compris entre ledit demi-logement du corps et ledit filtre.

Le filtre du corps est percé transversalement d'au moins un trou et comporte, contre sa face orientée en direction dudit corps, la membrane-clapet dont la concavité forme un espace délimité par ledit filtre, l'ensemble des trous débouchant dans cet espace.

La membrane-clapet est mobile entre deux positions, l'une concave empêchant le passage du liquide infusé, et l'autre plane permettant le passage dudit liquide infusé selon la pression qui lui est appliquée.

Le demi-logement du corps est muni d'un conduit d'évacuation du liquide infusé dont l'orifice est disposé entre ledit demi-logement et la membrane-clapet.

L'élément escamotable est une butée formant, en position déployée, les moyens de réception, et, en position escamotée, les moyens d'éjection automatique, par simple gravité du conditionnement, l'élément étant monté sur un axe guidé, à l'encontre d'un ressort de rappel ; l'extrémité libre de l'axe guidé coopère avec une came de commande montée à l'encontre d'un ressort.

Les moyens de maintien en position du conditionnement sont solidaires d'au moins un axe, monté à l'encontre d'un ressort, ledit ressort maintient les moyens de maintien en position à mi-distance du corps et de la chaudière de manière à décoller ledit conditionnement, lorsque l'écartement entre ledit corps et ladite chaudière est maximum.

Le corps de la machine comporte une chambre, dans laquelle un piston fixe est présent, le corps étant mobile par rapport au piston fixe, caractérisé par le fait que ledit corps possède un conduit d'entrée et de sortie d'eau débouchant dans la chambre, de sorte que le groupe formé par le corps et le piston fixe forme un vérin simple effet qui diminue ou augmente le volume de la chambre par la sortie ou l'entrée d'eau via le conduit, ce qui éloigne ou rapproche horizontalement le corps de la chaudière.

Le piston fixe est muni d'une butée qui coopère avec la came de commande lorsque la chambre est minimum, de sorte que les moyens de réception sont armés et les moyens d'éjection automatique sont désarmés, c'est-à-dire que la butée escamotable prend une position déployée permettant la réception d'un nouveau conditionnement.

La chaudière est munie d'une butée qui sert de butoir aux moyens de réception, lorsque le corps et la chaudière se rapprochent, de sorte que lesdits moyens de réception sont désarmés et les moyens d'éjection automatique sont armés, c'est-à-dire que la butée escamotable prend une position escamotée.

Le demi-logement du corps et/ou le demi-logement de la chaudière sont pourvus d'un élément souple, qui absorbe les variations de volume du conditionnement.

Le corps et la chaudière sont disposés selon un axe longitudinal sensiblement horizontal.

L'invention concerne également une machine automatique pour la préparation d'infusions de boissons chaudes telles que du café qui comprend un groupe formé d'un corps placé en regard d'une chaudière, le corps et la chaudière étant placés selon un axe horizontal, et destinés à être rapprochés réversiblement l'un de l'autre pour former une chambre d'infusion, au niveau de laquelle sont présents des moyens de réception, de maintien en position et d'éjection automatique d'un conditionnement individuel contenant le produit à infuser, caractérisée par le fait que le corps ou la chaudière est équipé d'une butée mobile en rotation selon au moins un axe sensiblement horizontal et perpendiculaire à l'axe longitudinal de l'ensemble corps-chaudière ; la butée est située au niveau de la chambre d'infusion et est mobile entre :
- une position dans le plan de ladite chambre, la butée faisant office de moyens de réception du conditionnement, et
- une position hors du plan de la chambre d'infusion, ladite butée faisant alors office de moyens d'éjection dudit conditionnement.

La butée est constituée d'un étrier qui comprend deux montants latéraux sensiblement verticaux qui coopèrent chacun avec un axe d'articulation, et qui sont reliés l'un à l'autre par une traverse qui réceptionne le conditionnement lorsque la butée est dans le plan de la chambre d'infusion.

Des moyens de maintien en position d'un conditionnement sont présents au niveau de la butée et guident sensiblement verticalement du haut vers le bas ledit conditionnement.

Les moyens de maintien en position sont formés de deux éléments rainurés verticalement, dans lesquels le conditionnement coulisse et est maintenu en position verticale, chaque élément étant disposé de part et d'autre de la chambre d'infusion.

La butée comporte au moins une came de commande qui coopère avec le corps ou la chaudière lorsque ceux-ci se rapprochent l'un de l'autre, la came de commande commandant la butée lors du mouvement de la position dans le plan à la position hors du plan de la chambre d'infusion, le mouvement inverse s'effectuant par simple gravité lorsque ledit corps et ladite chaudière s'éloignent l'un de l'autre.

La butée comporte au moins une patte porteuse d'une cale qui coopère avec le corps ou la chaudière, lors de l'éloignement dudit corps et de ladite chaudière, ce qui retarde le retour automatique de la butée en position dans le plan de la chambre d'infusion et facilite l'éjection du conditionnement.

L'extrémité libre de la cale est de biais, et le corps ou la chaudière de la machine est muni d'une aile biaisée, les parties biaisées de ladite cale et de l'aile coopèrent pour faciliter le passage de la butée dans la position hors du plan de la chambre d'infusion, et pour empêcher le passage de la butée dans la position dans ledit plan.

Un volet est mobile en rotation, selon au moins un axe sensiblement horizontal perpendiculaire à l'axe longitudinal de la machine, entre une position dans le plan de la chambre d'infusion, interdisant l'introduction d'un nouveau conditionnement, et une position hors du plan permettant l'introduction du nouveau conditionnement.

L'axe de rotation de la butée et l'axe de rotation du volet sont coaxiaux.

Le corps est amovible par rapport à la chaudière.

Les dessins ci-joints sont donnés à titre d'exemples indicatifs et non limitatifs. Ils représentent plusieurs modes de réalisation préférés selon l'invention. Ils permettront de comprendre aisément l'invention.

La figure 1 représente une vue schématique latérale en coupe partielle d'un mode de réalisation de l'invention.

La figure 2 représente une vue en perspective des moyens de réception et des moyens de maintien en position, ainsi que des mouvements d'entrée et de sortie du conditionnement du produit à infuser.

La figure 3 représente une vue en coupe transversale selon A-A de la figure 2, lorsque le conditionnement est positionné pour être utilisé, et que le corps et la chaudière sont éloignés l'un de l'autre au maximum.

La figure 4 représente une vue identique à celle de la figure 3, mais dans laquelle le conditionnement est plaqué contre le corps qui se rapproche de la chaudière.

La figure 5 représente la même vue qu'aux figures 3 et 4 mais dans laquelle le déplacement du corps est achevé, de sorte que le conditionnement est coincé entre ledit corps et ladite chaudière.

La figure 6 représente une vue en coupe longitudinale d'un détail de la figure 1, lorsque le conditionnement vient de pénétrer à l'intérieur de la machine automatique ; ledit conditionnement est maintenu en position et se trouve partiellement circonscrit par les deux filtres en regard l'un de l'autre.

La figure 7 représente la même vue qu'à la figure 6, mais dans laquelle les deux filtres se sont rapprochés sous l'action du piston fixe et du corps cylindrique mobile ; le conditionnement est alors quasi-complètement circonscrit entre lesdits filtres, seul son pourtour sert de joint d'étanchéité entre ces deux filtres.

La figure 8 représente une vue identique à la figure 7 à la différence que l'eau chauffée par la chaudière vient mouiller le produit à infuser contenu dans le conditionnement ; la membrane-clapet, coopérant avec le filtre du corps cylindrique mobile, empêche le passage du liquide infusé.

La figure 9 représente une vue identique à la figure 8, dans laquelle, à la différence de la figure précédente, la membrane-clapet a changé de configuration, sous l'effet de la pression de l'eau provenant de la chaudière qui a augmenté, le liquide infusé peut alors s'écouler par le conduit d'évacuation.

La figure 10 représente une vue schématique latérale en coupe partielle d'un autre mode de réalisation de l'invention.

La figure 11 représente une vue en coupe longitudinale d'un détail correspondant à celui des figures 6 à 9, mais dans lequel le groupe piston fixe-corps cylindrique mobile est muni d'un joint d'étanchéité placé en regard du pourtour du conditionnement.

La figure 12 représente une vue identique à la figure 11, dans laquelle, le corps cylindrique mobile s'est rapproché de la chaudière sous l'effet du piston fixe, de sorte que le joint vient en contact du pourtour du conditionnement et applique ledit pourtour contre la chaudière.

La figure 13 représente une vue latérale partielle de la machine selon l'invention, et plus précisément de l'environnement structurel des moyens de réception, de maintien en position et d'éjection automatique, et la coopération entre le corps et la chaudière qui constituent ladite machine.

La figure 14 représente une vue latérale des moyens de réception, de maintien en position et d'éjection lors de l'introduction du conditionnement dans lesdits moyens.

La figure 15 représente une vue latérale identique à la figure 14, dans laquelle le corps se rapproche de la chaudière, le conditionnement étant en position de réception et étant maintenu en position.

La figure 16 représente une vue latérale identique à la figure 15, dans laquelle le corps et la chaudière sont rapprochés le plus près l'un de l'autre, le conditionnement étant contenu à l'intérieur de la chambre d'infusion.

La figure 17 représente une vue latérale identique à la figure 16, dans laquelle le corps s'éloigne de la chaudière, le conditionnement ayant été éjecté automatiquement.

La figure 18 représente une vue de face selon C-C de la figure 13 du moyen de solidarisation du corps et de la chaudière, porté par ladite chaudière.

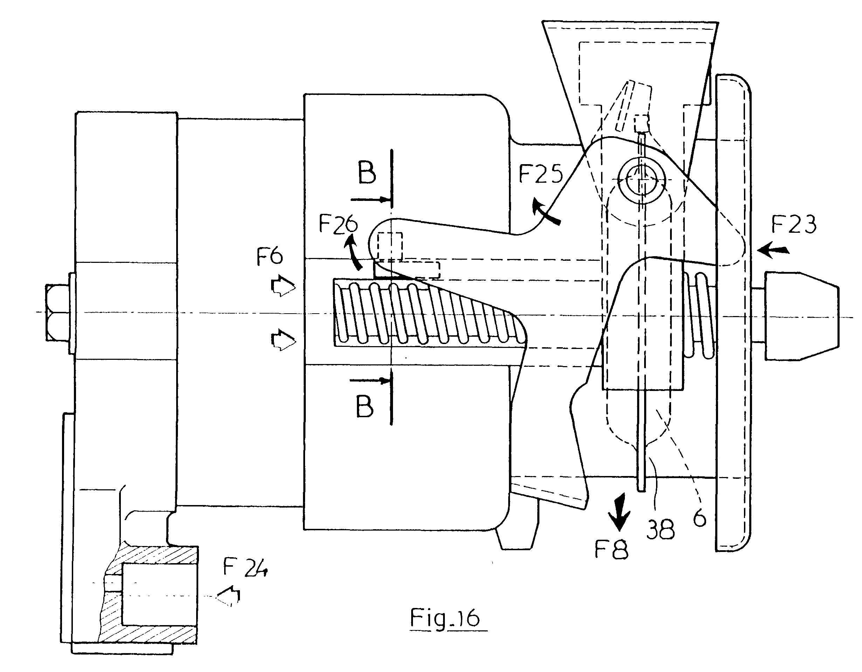

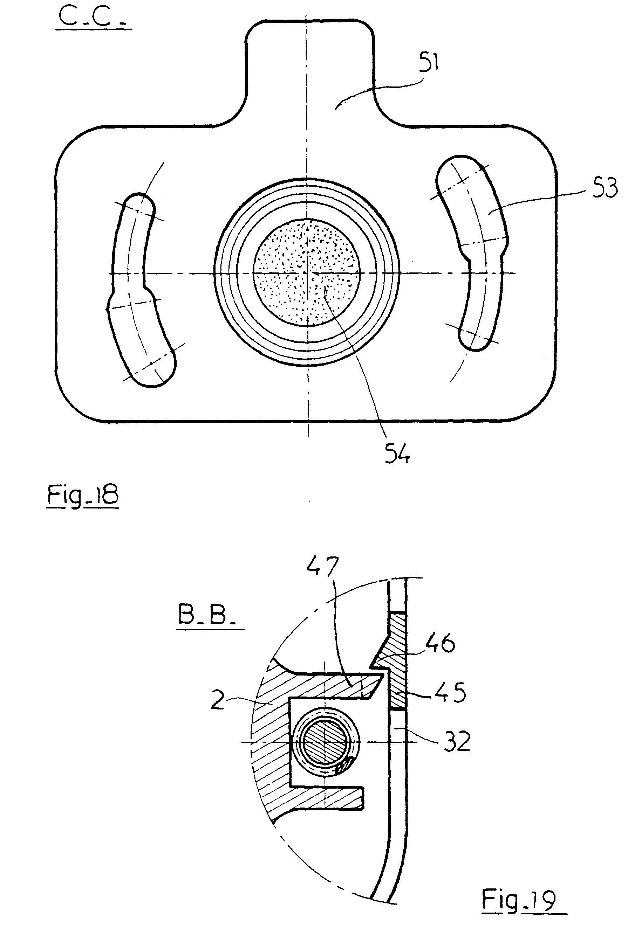

Enfin, la figure 19 représente une vue en coupe partielle selon B-B de la figure 16.

La présente invention concerne une machine automatique pour la préparation d'infusions de boissons chaudes telles que du café.

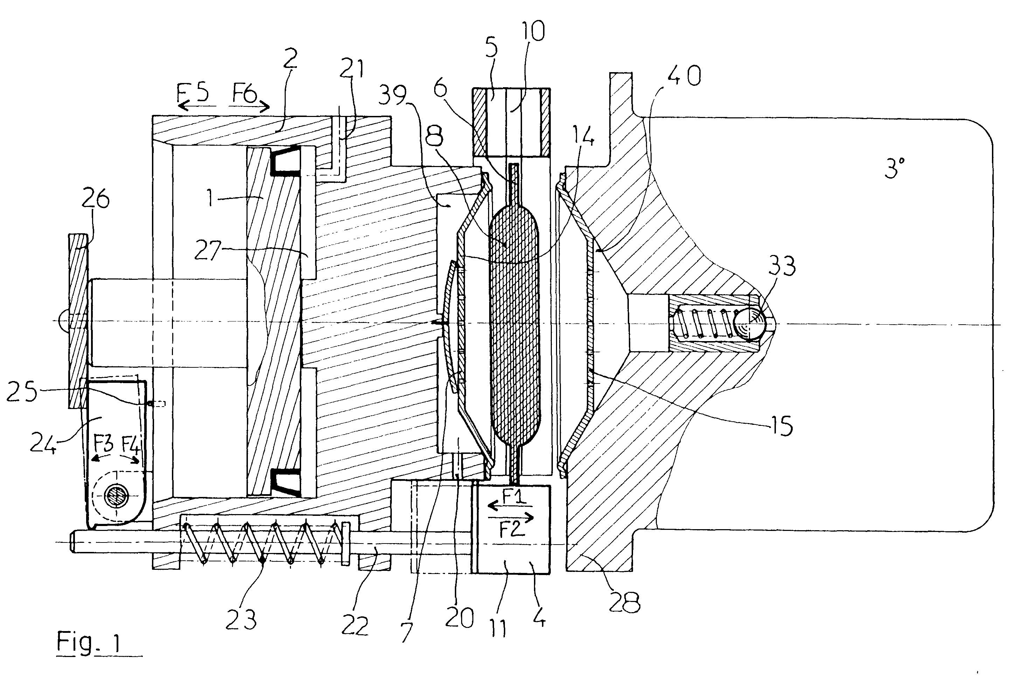

Cette machine est bien représentée aux figures 1, 10 et 13 selon trois modes différents de réalisation.

Le premier mode de réalisation est présenté à la figure 1, il comprend un groupe formé d'un piston fixe 1 et d'un corps cylindrique mobile 2 par rapport au piston fixe 1.

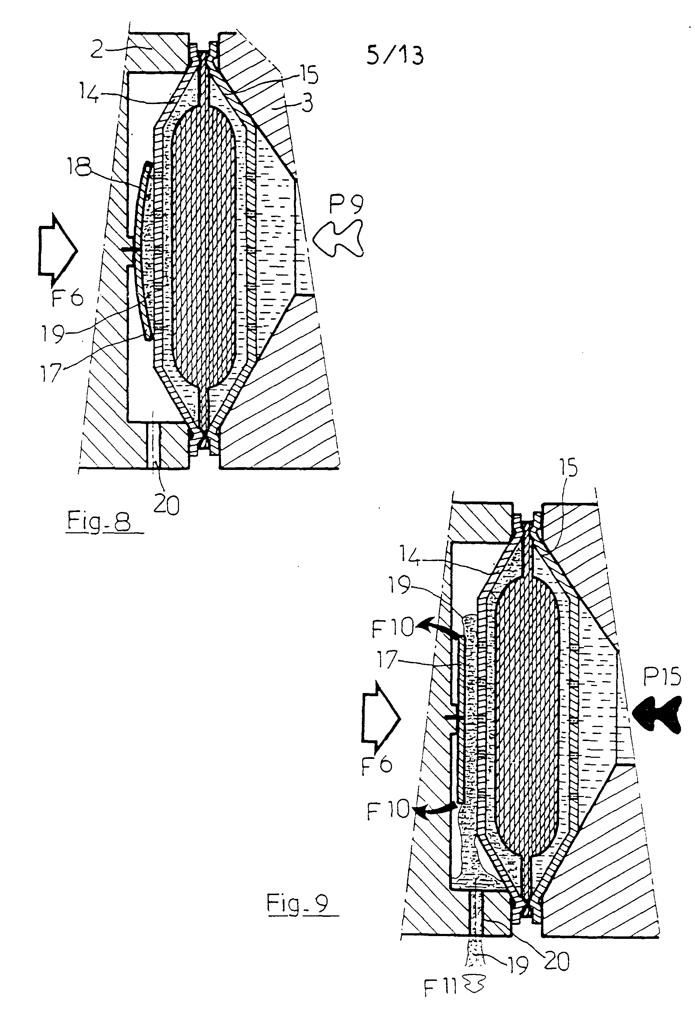

Ce corps cylindrique mobile 2 possède un conduit d'évacuation 20 pour le liquide infusé 19, comme on le voit bien représenté à la figure 9.

Ce groupe formé du piston fixe 1 et du corps cylindrique mobile 2 est placé en vis-à-vis d'une chaudière 3.

Le groupe 1 et 2 et la chaudière 3 sont en position horizontale et peuvent se rapprocher l'un 1 et 2 de l'autre 3, horizontalement.

Cette machine automatique est caractérisée par un ensemble de moyens la rendant nouvelle et inventive.

Il s'agit des moyens de réception 4, des moyens d'éjection automatique 4 et des moyens de maintien en position 5 prévus pour un conditionnement 6 contenant le produit à infuser 8.

Ces moyens seront décrits en détail par la suite.

Il s'agit ensuite des moyens d'étanchéité 13 présents entre le corps 2 et le conditionnement 6, d'une part, et la chaudière 3 et ledit conditionnement 6, d'autre part, et plus précisément entre les deux demi-logements 39 et 40 en regard l'un 39, placé sur le corps 2, de l'autre 40, placé sur la chaudière 3.

Il s'agit enfin des moyens de mouillage 7 dudit produit à infuser 8 avant extraction.

Ces moyens seront également décrits en détail par la suite.

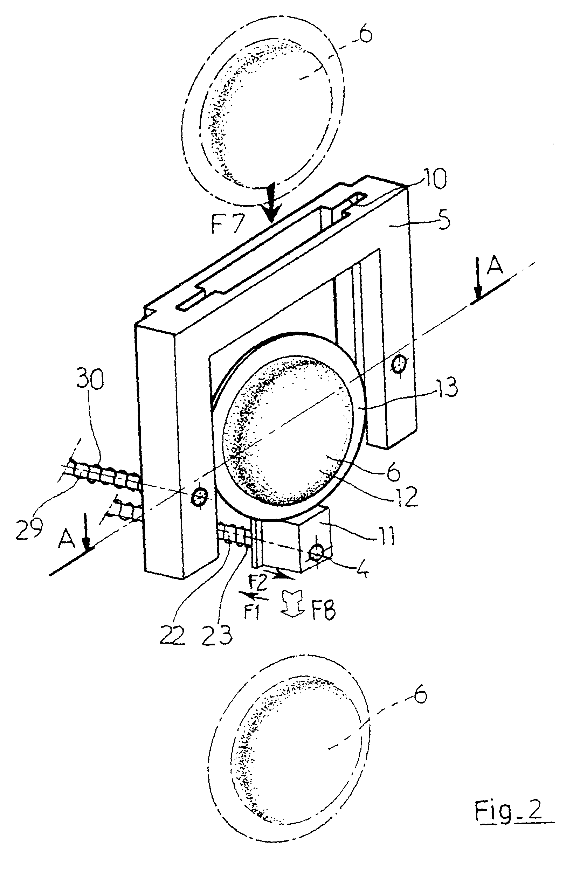

Comme on le voit bien à la figure 2, les moyens de réception 4 et les moyens d'éjection automatique 4 sont constitués par une seule et même butée escamotable 11, mobile selon les flèches F1 et F2.

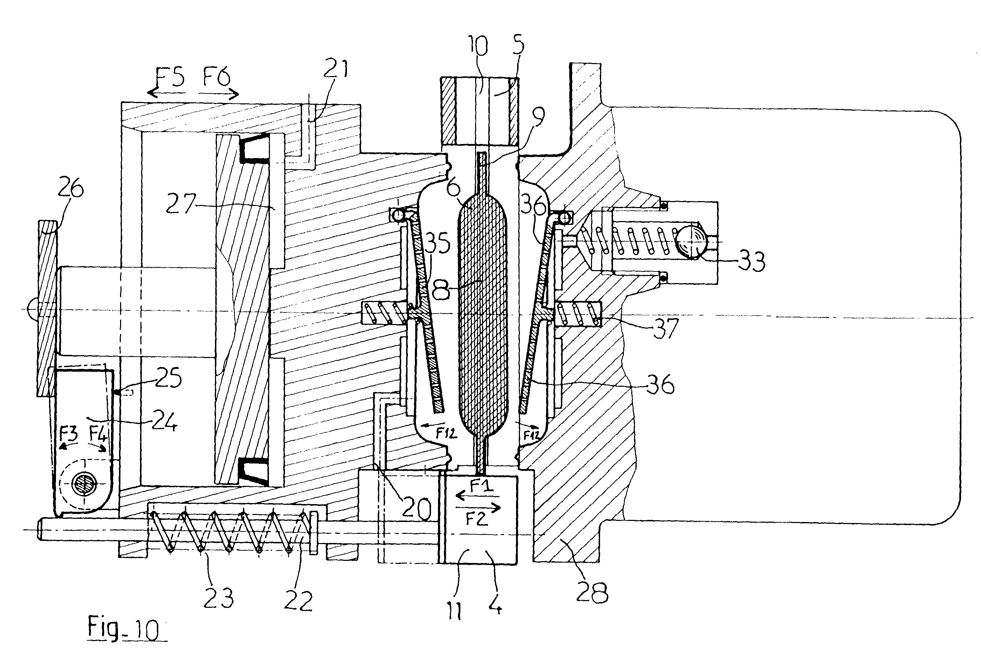

Celle-ci 11 est placée en position inférieure. Elle est destinée à immobiliser temporairement un conditionnement 6 du produit à infuser 8 dans l'écartement maximum qui existe entre le groupe piston fixe 1-corps cylindrique mobile 2 et la chaudière 3, c'est-à-dire, quand le corps 2 est déplacé horizontalement selon F5, des figures 1 et 10, par rapport à la chaudière 3. La butée 11 constitue alors les moyens de réception 4 puisque sa position est due au mouvement selon F2, et qu'elle va permettre de stopper l'entrée selon F7 du conditionnement 6. Cet arrêt s'effectue en regard des deux demi-logements 39 et 40.

Après que l'infusion ou la lixiviation a été réalisée, la butée 11 s'escamote selon F1, formant ainsi les moyens d'éjection automatique 4, ce qui permet la sortie par simple gravité du conditionnement 6 usagé selon la flèche F8.

Les moyens de maintien en position 5 sont, pour leur part, constitués par deux rainures latérales 10 en position verticale, dans lesquelles le conditionnement 6 du produit à infuser 8 coulisse verticalement.

Ce sont les rainures latérales 10 qui vont permettre au conditionnement 6 de rester en position sensiblement verticale afin de se trouver en position sensiblement parallèle aux deux demi-logements 39 et 40, qui coopèrent ensemble pour enserrer le conditionnement 6.

La forme de ce conditionnement 6 contenant le produit à infuser 8 est de type pastille formée essentiellement d'une partie centrale souple 12 renfermant le produit à infuser 8 et d'une partie périphérique 13 formant rebord de scellement et de rigidification.

Un tel conditionnement 6 a d'ores et déjà fait l'objet d'une demande de brevet par la demanderesse. Cette demande a été enregistrée sous le n° 93 10760 le 6 septembre 1993.

L'utilisation d'un tel conditionnement 6 se fait à l'intérieur de machines automatiques qui comprennent le groupe formé par le piston fixe 1 et le corps cylindrique mobile 2 ainsi que par la chaudière 3. Sans sortir du domaine de l'invention, la chaudière pourrait être mobile par la présence en son sein d'un piston fixe, le corps serait alors fixe.

Le groupe 1 et 2 ainsi que la chaudière 3 sont munis chacun d'une plaque faisant office de filtre 14 ou 15 placé chacun dans un des demi-logements 39 et 40.

Le filtre 14 est positionné dans le demi-logement 39 au niveau du groupe 1 et 2, alors que le filtre 15 est positionné dans le demi-logement 40, au niveau de la chaudière 3.

Ces filtres 14 et 15 ont une position en regard l'un 14 de l'autre 15, et ont une forme qui permet d'enserrer en totalité la partie centrale 12 du conditionnement 6 lorsque le corps 2 est rapproché de la chaudière 3. Dans cette position, les deux demi-logements 39 et 40 forment la chambre d'infusion 38.

La partie périphérique 13 dudit conditionnement 6 fait alors office de moyens d'étanchéité entre le filtre 14 du corps 2 et le filtre 15 de la chaudière 3, lorsque ceux-ci 14 et 15 sont rapprochés, selon F6, l'un 14 de l'autre 15 sous l'effet du groupe 1 et 2, comme cela est bien représenté aux figures 1 et 10.

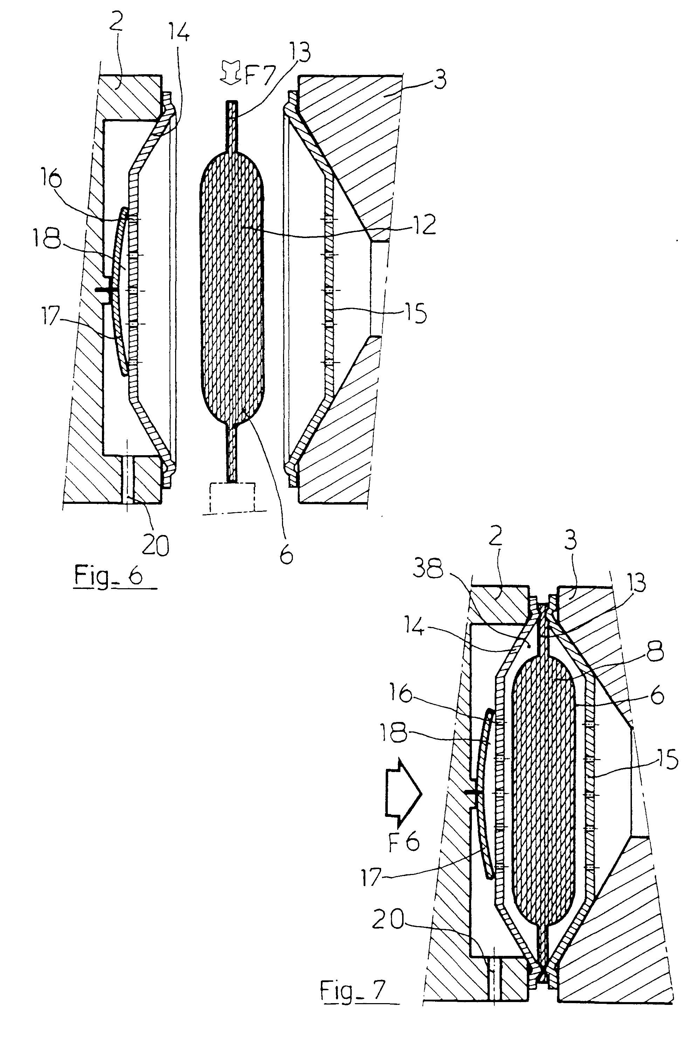

Comme on le voit bien aux figures 6 à 9, le filtre 14 du corps cylindrique mobile 2, percé transversalement de plusieurs trous 16, comporte, contre sa face orientée en direction dudit corps 2, une membrane-clapet 17 dont la forme concave délimite un espace 18 avec l'aide dudit filtre 14.

Le filtre 15 est également percé de trous.

L'ensemble des trous 16 du filtre 14 débouche dans cet espace 18.

C'est dans cette position que la lixiviation peut commencer.

La chaudière 3 va faire chauffer l'eau qu'elle contient, provenant par exemple du robinet, non représenté sur les figures.

Lorsque la pression est suffisante, un clapet 33 va s'ouvrir pour permettre le passage de l'eau chaude à l'intérieur de la chambre d'infusion 38 où se trouve le conditionnement 6. Ceci est bien représenté à la figure 8.

La membrane-clapet 17 est mobile entre deux positions, l'une concave comme représenté à la figure 8, qui empêche le passage du liquide infusé 19, et l'autre plane, comme on le voit bien à la figure 9, permettant le passage dudit liquide infusé 19 ; la modification de la forme de la membrane-clapet 17 est fonction de la pression qui lui est appliquée par l'intermédiaire du liquide infusé 19.

Si cette pression est faible, comme on le voit à la figure 8, selon la flèche P9, la membrane-clapet 17 ne se déforme pas.

Par contre, si la pression augmente selon la flèche P15 de la figure 9, la membrane-clapet 17 se déforme selon F10, ce qui va permettre le passage du liquide infusé 19 par le conduit d'évacuation 20, selon la flèche F11.

Cette faculté va permettre ainsi le mouillage du produit à infuser 8 présent à l'intérieur du conditionnement 6.

Les moyens de mouillage 7 sont donc formés par le filtre 14 du corps cylindrique mobile 2 et par la membrane-clapet 17, ainsi que par la disposition des trous 16 du filtre 14 situés en regard de la membrane-clapet 17.

Selon les figures 1 et 10, le corps cylindrique mobile 2 possède un conduit 21 qui a la faculté de pouvoir laisser entrer et sortir de l'eau provenant par exemple du robinet, non représenté.

L'ouverture intérieure de ce conduit 21 est placée dans la chambre 27 du corps cylindrique mobile 2, cette chambre 27 est délimitée par le piston fixe 1, de sorte que le groupe 1 et 2 forme un vérin simple effet, qui diminue l'écartement entre les deux filtres 14 et 15 lorsque l'eau entre dans la chambre 27, et qui augmente cet écartement lorsque l'eau en sort.

C'est donc le mouvement selon F5 ou F6 du corps cylindrique mobile 2 par rapport au piston fixe 1 qui va permettre le serrage du conditionnement 6 entre les deux filtres 14 et 15.

La butée escamotable 11, qui forme les moyens de réception et les moyens d'éjection automatique 4, comme on le voit bien aux figures 1, 2 et 10, est montée sur un axe coulissant guidé 22 entre deux paliers solidaires du corps cylindrique mobile 2, à l'encontre d'un ressort de rappel 23. Ledit axe coulissant guidé 22 est parallèle à l'axe de déplacement du corps cylindrique mobile 2.

L'extrémité libre de l'axe guidé 22 coopère pour sa part avec une came de commande 24, montée elle aussi à l'encontre d'un ressort 25.

Cette came de commande 24 est montée en rotation selon les flèches F3 et F4, comme cela est représenté aux figures 1 et 8.

Toujours selon ces mêmes figures, le piston fixe 1 est muni d'une butée 26 qui coopère avec la came de commande 24 lorsque l'espace 27, compris entre le piston fixe 1 et le corps cylindrique mobile 2, est minimum, de sorte que la came 24 ne va plus avoir d'effet sur l'axe 22, ce qui va permettre à la butée escamotable 11 de prendre une position déployée sous l'impulsion du ressort 23, formant ainsi les moyens de réception 4.

Cette position déployée autorise la réception d'un nouveau conditionnement 6. C'est ce qui correspond à la flèche F2.

Pour faire le mouvement inverse, la chaudière 3 est munie d'une butée 28, contre laquelle la butée 11 vient en appui et retourne en position escamotée selon la flèche F1 sous l'effet du rapprochement du corps 2 par rapport à la chaudière 3. Ce mouvement se produit lorsque la chambre 27 du groupe 1 et 2 augmente de volume sous l'effet de l'entrée d'eau provenant du conduit 21 , ce qui va permettre l'escamotage en force de la butée 11, formant ainsi les moyens d'éjection automatique 4.

Ceci va permettre l'évacuation par simple gravité du conditionnement 6 usagé.

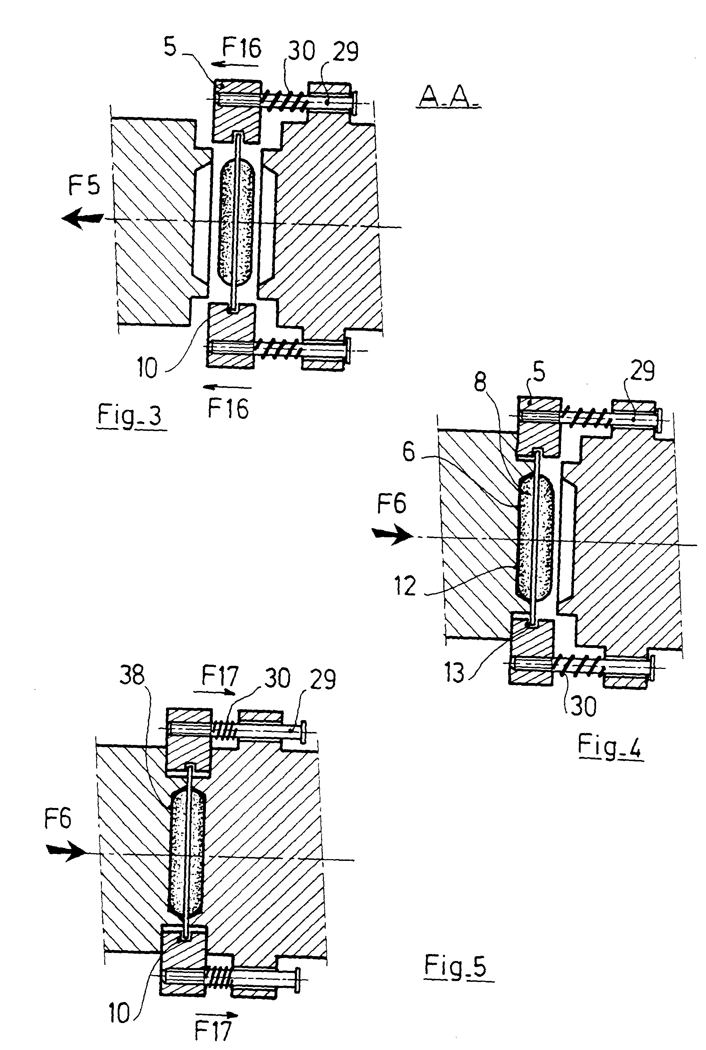

Comme on le voit bien sur les figures 3, 4 et 5, les rainures latérales 10, qui forment les moyens de maintien en position 5, sont solidaires d'au moins un axe 29 monté à l'encontre d'un ressort 30 qui maintient les rainures latérales 10 à mi-distance des deux filtres 14 et 15 lorsque l'écartement entre le groupe 1 et 2 et la chaudière 3 est maximum, comme cela est bien visible à la figure 3, de sorte que le conditionnement 6 usagé est décollé desdits filtres 14 et 15 et va pouvoir être évacué lorsque la butée 11 sous-jacente sera escamotée.

Les rainures latérales 10, les axes 29 et les ressorts 30 forment en combinaison les moyens de décollement des conditionnements 6 usagés.

Si ces moyens n'étaient pas présents, il serait impossible auxdits conditionnements 6 usagés, donc humidifiés, de s'évacuer par simple gravité. Les rainures latérales 10 sont, au repos, à mi-distance du corps 2 et de la chaudière 3. Lorsque ledit corps 2 se rapproche selon F6 de ladite chaudière 3, le corps 2 entre tout d'abord en contact avec le conditionnement 6, sans que les axes 29 et les ressorts 30 ne soient utilisés. C'est ce qui est bien représenté à la figure 4. Le mouvement selon F6 se poursuit alors et le corps 6 fait bouger avec lui ledit conditionnement 6 ainsi que les rainures latérales 5 à l'encontre des ressorts 30, selon F16, jusqu'à ce que le contact avec la chaudière 3 se fasse, c'est ce qui est représenté à la figure 5.

Lorsque le mouvement inverse, selon F5, s'opère, les ressorts 30, les axes 29 et les rainures latérales 5 coopèrent pour retrouver leur position d'origine, où le conditionnement 6 est placé sensiblement à mi-distance du corps 2 et de la chaudière 3. Ledit conditionnement 6 est alors décollé, car les rainures latérales 5 sont mobiles selon F17 sous l'action de poussée des ressorts 30.

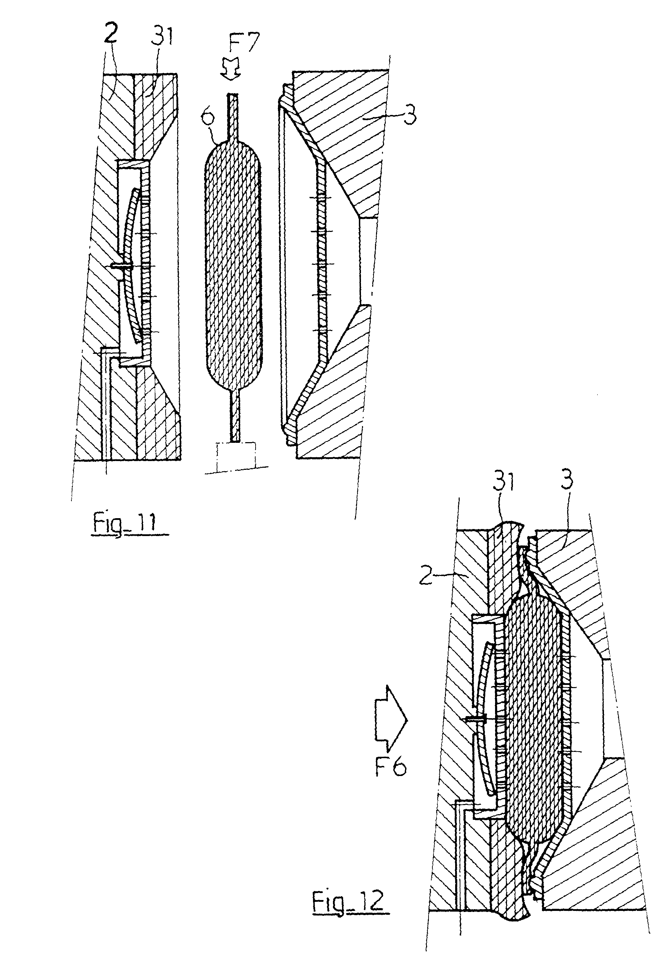

Selon un autre mode de réalisation représenté aux figures 11 et 12, le demi-logement du groupe piston fixe-corps cylindrique mobile comprend un élément souple 31, qui permet d'absorber des variations de volume des conditionnements 6, qui sont soit mal calibrés, soit de nature différente que ceux généralement utilisés.

Celui-ci 31 est complémentaire de la partie périphérique rigide 13 du conditionnement 6 qui assure l'étanchéité entre le conditionnement 6 et le corps 2, d'une part, et la chaudière 3, d'autre part.

Le deuxième mode de réalisation est présenté à la figure 10, où le groupe 1 et 2 et la chaudière 3 sont munis de deux filtres 35 et 36 montés pivotants selon F12 à l'encontre de ressorts 37, qui vont faciliter le décollement du conditionnement usagé 6.

Les moyens de décollement sont donc différents de ceux représentés aux figures 3 à 5, correspondant au mode de réalisation de la figure 1.

Dans ce cas, les moyens de maintien en position 5, voire de réception et d'éjection automatique 4, ne sont plus absolument nécessaires.

Dans un souci de simplification, les moyens de mouillage 7, et plus précisément la membrane-clapet 17, ne sont pas représentés sur cette figure. Le troisième mode de réalisation concerne une machine automatique pour la préparation d'infusions de boissons chaudes telles que du café.

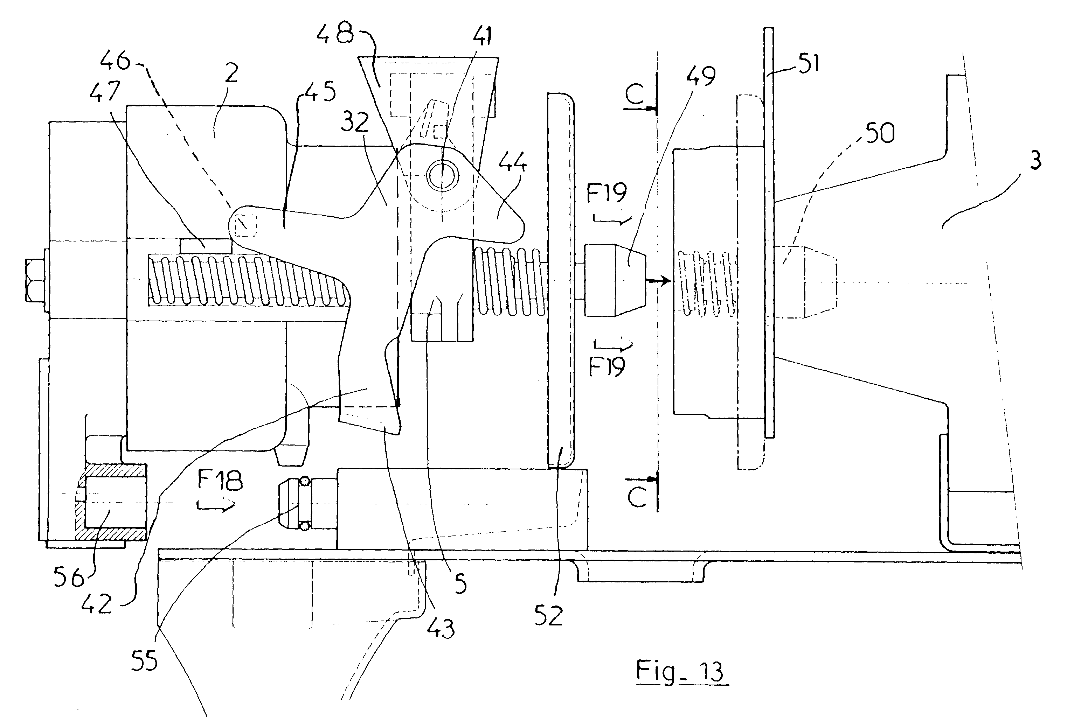

Cette machine est bien représentée sur les figures 13 à 17.

De manière classique, ladite machine comprend un groupe formé d'une part, d'un corps 2 placé en regard d'une chaudière 3.

Le corps et la chaudière sont placés selon un axe horizontal et sont destinés à être rapprochés l'un de l'autre, selon la flèche F6, puis à être éloignés, selon la flèche F13.

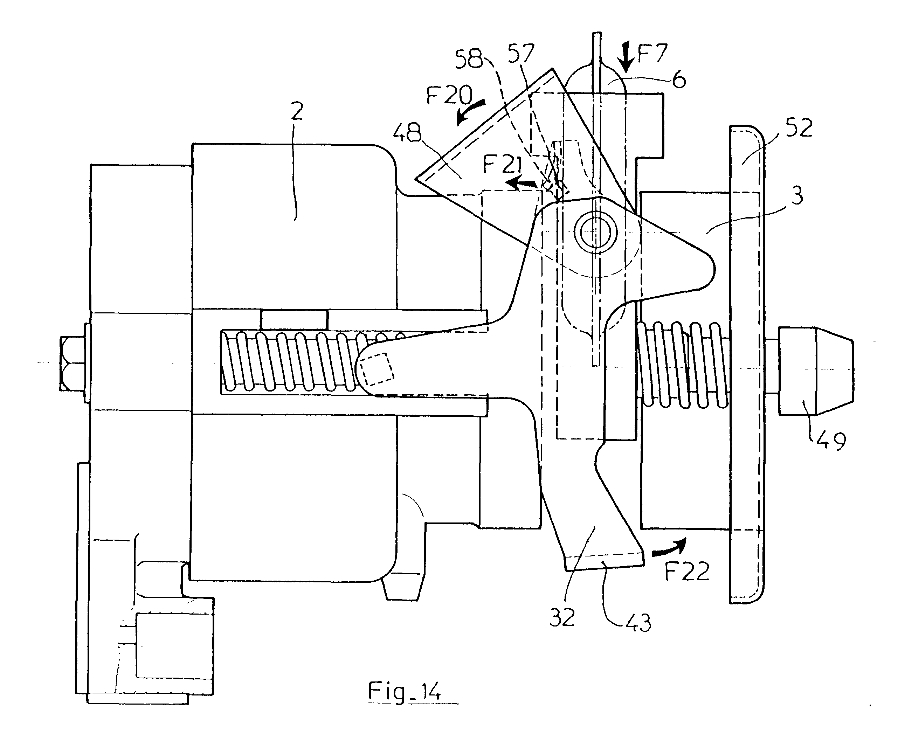

La figure 13 montre la machine automatique au repos, alors que les figures 14 à 17 montrent cette même machine dans les différentes positions permettant la lixiviation.

Sur la figure 14, on introduit un conditionnement 6 contenant le produit à infuser, selon la flèche F7.

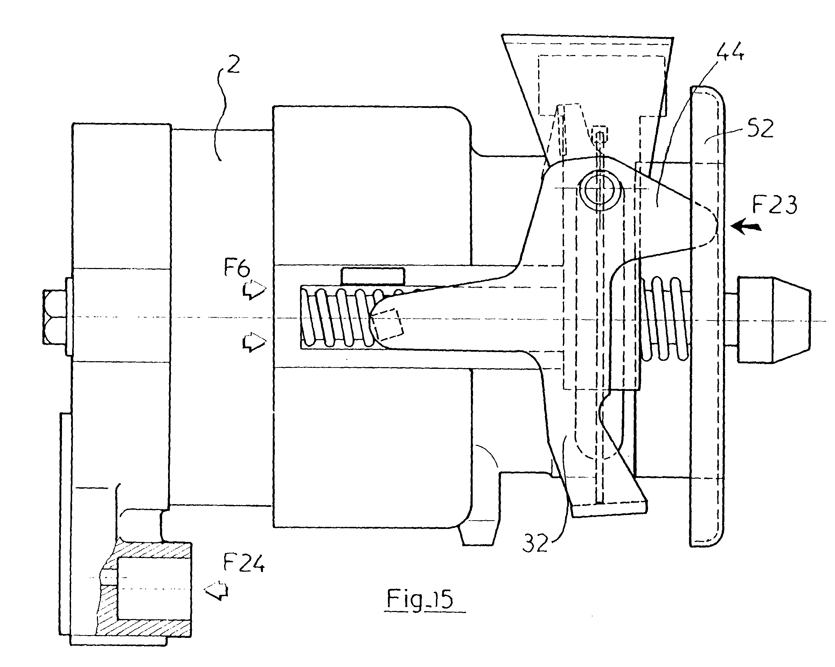

Sur la figure 15, le corps 2 et la chaudière 3 se rapprochent l'un de l'autre, selon F6.

Sur la figure 16, le rapprochement entre le corps 2 et la chaudière 3 est terminé. Ceci forme une chambre d'infusion 38 à l'intérieur de laquelle est situé le conditionnement 6.

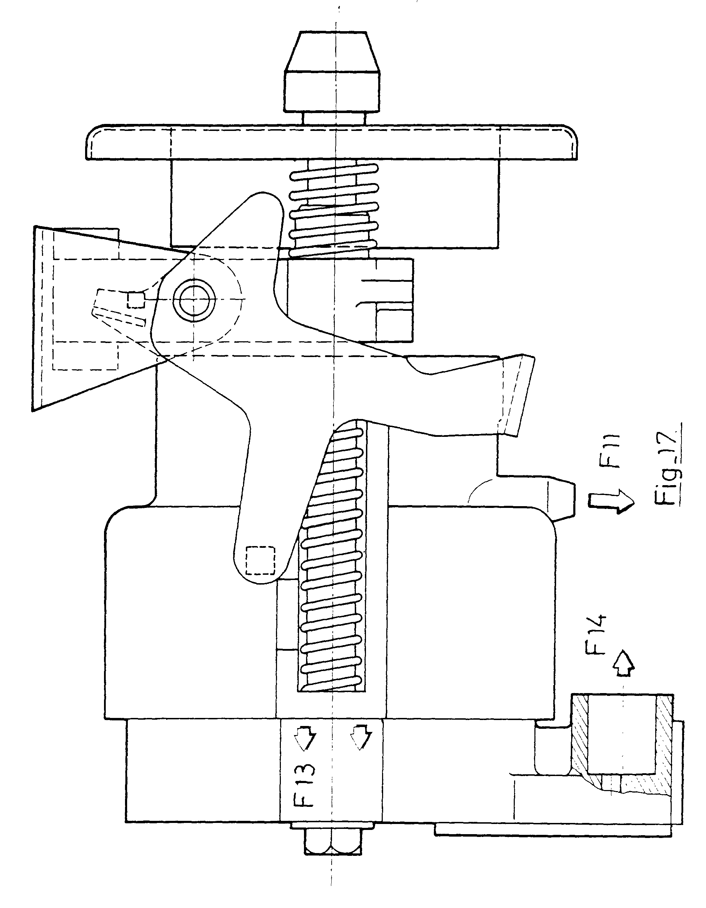

Enfin, la figure 17 représente l'éloignement du corps 2 par rapport à la chaudière 3, selon la flèche F13, permettant l'éjection automatique du conditionnement 6, selon la flèche F8 qui succède à la sortie du liquide infusé selon F11.

Cette flèche F8 est représentée sur la figure 16 alors que le corps 2 et la chaudière 3 ne sont pas encore éloignés. Cette flèche F8 anticipe en fait le mouvement d'éjection automatique du conditionnement 6.

En fait, et comme cela est bien connu de l'état de la technique, le mouvement du corps 2 est effectué par un ensemble piston-chambre, non représenté sur les figures, qui est déplacé à l'aide de l'eau introduite à l'intérieur de la chambre. Cette introduction se fait selon F24, comme on le voit sur la figure 16, ce qui permet de déplacer le corps 2, selon F6.

Le mouvement inverse est effectué par l'intermédiaire d'une sortie d'eau F14 qui autorise le déplacement du corps 2, selon F13.

L'essentiel de l'invention réside dans la présence d'une butée mobile 32 dont la mobilité s'effectue en rotation selon au moins un axe 41 sensiblement horizontal et perpendiculaire à l'axe longitudinal de l'ensemble corps 2-chaudière 3.

Le mouvement de basculement de la butée 32, selon son axe de rotation 41, s'effectue selon F25, comme on le voit bien sur la figure 16. Le mouvement inverse n'est pas représenté sur les figures mais celui-ci s'effectue par simple gravité selon F22 tel que représenté à la figure 14.

Très précisément, la butée est située au niveau de la chambre d'infusion 38 et est mobile entre deux positions extrêmes. Une première position dite dans le plan de chambre 38, c'est-à-dire telle que la butée 32 est représentée sur les figures 14 et 15, qui permet à la butée 32 de réceptionner le conditionnement 6 qui a été introduit. Une seconde position dite hors du plan de la chambre d'infusion 38, comme on le voit sur la figure 13 et également sur les figures 16 et 17, dans laquelle ladite butée 32 fait office de moyens d'éjection dudit conditionnement 6.

En fait, cette butée est constituée d'un étrier 32 qui comprend deux montants latéraux 42, sensiblement verticaux, qui coopèrent chacun avec un axe d'articulation 41 et qui sont reliés l'un à l'autre par une traverse 43, qui réceptionne le conditionnement 6 lorsque la butée 32 est dans le plan de la chambre d'infusion 38.

Néanmoins, pour que le mouvement du conditionnement 6, de son introduction à son éjection, c'est-à-dire selon les flèches F7 et F8, soit convenable, la machine automatique nécessite la présence de moyens de maintien en position 5, qui permettent au conditionnement 6 de rester toujours dans le plan de la chambre d'infusion 38.

Ces moyens de maintien en position 5 guident donc verticalement du haut vers le bas ledit conditionnement 6, le mouvement étant effectué par simple gravité.

Ces moyens de maintien en position 5 sont formés de deux éléments rainurés verticalement dans lesquels le conditionnement 6 coulisse et est maintenu en position verticale, chaque élément étant disposé de part et d'autre de la chambre d'infusion 38, les rainures étant disposées en regard l'une de l'autre.

Si comme on l'a vu, le mouvement de retour, inverse à F25, se fait par simple gravité, le mouvement selon F25 est lui asservi au mouvement du corps 2 par rapport à la chaudière 3.

A cet effet, la butée 32 comporte une came de commande 44 qui coopère avec la chaudière 3 lorsque le corps 2 et la chaudière 3 se rapprochent.

En fait, et comme on le voit bien sur les figures 15 et 16, la came de commande 44 ne coopère pas directement avec la chaudière 3 mais indirectement avec une butée 52 présente au contact de la chaudière 3 lorsque le corps 2 est mis en place au niveau de la machine comme on le verra plus loin. Le rapprochement de la butée 52 et de la came de commande 44 s'effectue selon F23.

L'architecture de la came de commande 44 va permettre le basculement, selon F25, de l'ensemble de la butée 32 faisant passer ladite butée 32 de la position dans le plan à la position hors du plan de la chambre d'infusion 38.

Ce mouvement permet donc de mettre en place les moyens d'éjection puisque la butée 32 n'est plus dans le plan de la chambre d'infusion 38.

Toutefois, le conditionnement 6 ne peut pas être éjecté pour l'instant puisque le corps 2 et la chaudière 3 le contiennent au niveau de la chambre d'infusion 38.

Bien entendu, lorsque l'éloignement du corps 2 et de la chaudière 3 est programmé, comme on le voit sur la figure 17, la butée 32 doit rester absente du plan de la chambre d'infusion 38 pour permettre l'évacuation du conditionnement 6.

Pour ce faire, la butée comporte une patte 45 porteuse d'une cale 46, qui coopère avec le corps 2, lors de l'éloignement dudit corps 2 et de la chaudière 3, ce qui retarde le retour automatique de la butée 32 en position dans le plan de la chambre d'infusion 38 et facilite l'éjection automatique du conditionnement 6.

De façon plus précise, et comme on le voit sur la figure 19, l'extrémité libre de la cale 46 est de biais alors que le corps 2 de la machine est muni d'une aile 47, biaisée également, les parties biaisées coopérant pour faciliter le passage de la butée 32 dans la position hors du plan formé par la chambre d'infusion 38 et pour empêcher le passage de la butée 32 dans la position dans le plan lorsque l'éloignement du corps 2 et de la chaudière 3 est amorcé. Le mouvement de la cale biaisée 46 et de l'aile biaisée 47 s'effectue selon la flèche F26.

Dans un but esthétique et utilitaire, un volet 48 mobile en rotation, selon un axe 41 sensiblement horizontal et perpendiculaire à l'axe longitudinal de la machine, est présent. Ce volet 48 a pour fonction d'interdire l'introduction d'un nouveau conditionnement 6 lorsqu'il est dans le plan de la chambre 38, et de permettre l'introduction dudit nouveau conditionnement 6, lorsqu'il est hors du plan de ladite chambre d'infusion 38.

En fait, l'axe de rotation 41 est identique pour le volet 48 et pour la butée 32.

Le mouvement du volet 48, entre la position dans le plan et la position hors du plan, s'effectue manuellement ou automatiquement, selon la flèche F20. Le mouvement inverse n'est pas représenté sur les figures, mais se fait de façon automatique à l'aide d'une languette 58 qui a des propriétés élastiques et qui est portée par la butée 32.

Cette languette 58 coopère avec une cale 57 présente au niveau du volet 48.

Lorsque le volet 48 est manoeuvré selon F20, la languette élastique 58 se déforme selon F21 et permet au volet 48 d'emmagasiner une certaine quantité d'énergie lui permettant, par l'intermédiaire de sa cale 57, de retourner automatiquement dans la position dans le plan de la chambre d'infusion 38.

Comme on le voit bien sur la figure 13, le corps 2 est amovible par rapport à la chaudière 3.

Le corps 2 peut être rapproché et fixé selon deux points principaux, selon les flèches F18 et F19.

La fixation du corps 2 sur la chaudière 3 s'effectue d'une part au niveau de la butée 52, et d'autre part au niveau du raccord rapide femelle 56, situé en position inférieure du corps 2.

En ce qui concerne le raccord rapide femelle 56, celui-ci coopère avec un raccord rapide mâle 55 dans lequel l'eau est injectée, selon F10, pour faire rapprocher le corps 2 et la chaudière 3, selon F24, et/ou l'eau est évacuée, selon F6, pour permettre l'éloignement du corps 2 par rapport à ladite chaudière 3, selon F13.

Le deuxième point de fixation au niveau de la butée 52 est réalisé par deux pièces mâles de fixation 49, situées au niveau de la butée 52, qui peuvent s'encastrer dans le corps de la chaudière 3 au niveau de pièces femelles de fixation 50.

En fait, chaque pièce mâle 49 est formée d'un corps cylindrique longitudinal se terminant au niveau de son extrémité libre par un plot de diamètre plus important, l'ensemble pouvant être positionnée au travers d'un alésage 53 d'un moyen de solidarisation 51, situé au niveau de la chaudière 3.

Ce moyen de solidarisation 51 est monté sur un axe de rotation 54 et chaque alésage 53 qu'il comprend a une forme d'arc correspondant à la position d'une pièce mâle 49, lorsque cette pièce mâle 49 est à l'intérieur d'une pièce femelle 50.

Par simple rotation du moyen de solidarisation 51, chaque alésage 53, en forme d'arc dont la largeur est variable, permet, au niveau de sa plus grande largeur, le passage des plots des pièces mâles 49, alors qu'au niveau de sa plus faible largeur, il permet le maintien en position de chaque pièce mâle 49.

## Revendications

1. Machine automatique pour la préparation d'infusions de boissons chaudes telles que du café qui comprend un groupe formé d'un corps (2) placé en regard d'une chaudière (3), destinés à être rapprochés l'un (2) de l'autre (3) pour former une chambre d'infusion (38), **caractérisée par le fait**
**qu'**elle comporte, entre le corps (2) et la chaudière (3), au niveau de la chambre d'infusion (38) :
- des moyens de réception et d'éjection automatique (4) d'un conditionnement (6) individuel contenant le produit à infuser (8), qui sont constitués d'au moins un élément escamotable (11), déployé en position sensiblement sous la chambre d'infusion (38), destiné à immobiliser temporairement ledit conditionnement (6) entre le corps (2) et la chaudière (3), lors de la réception et escamoté par rapport au passage du conditionnement (6) individuel, pour permettre l'éjection par simple gravité du conditionnement (6) individuel, le déplacement du conditionnement (6) individuel étant perpendiculaire à l'axe de la machine,
- des moyens de maintien en position (5) qui comportent deux rainures latérales (10) audit conditionnement (6) et sensiblement verticales, dans lesquels le conditionnement (6) coulisse et est maintenu en position verticale lorsque les moyens de réception et d'éjection automatique (4) sont présents.

2. Machine selon la revendication 1 ou 2, **caractérisée par le fait**
**que** la chambre d'infusion (38) est constituée par deux demi-logements (39 et 40), l'un (39) porté par une face du corps (2), l'autre (40) porté par une face de la chaudière (3), ces deux faces étant en regard l'une de l'autre ; ladite chambre d'infusion (38) est formée lorsque les deux demi-logements (39 et 40) se jouxtent, et
**que** les moyens d'étanchéité (13) sont portés par le conditionnement (6) individuel du produit à infuser (8) de sorte que, lorsque la chambre d'infusion (38) est formée, le conditionnement (6) individuel s'insère entre les deux demi-logements (39 et 40).

3. Machine selon la revendication 2, **caractérisé par le fait**
**qu'**elle utilise des conditionnements (6) de produits à infuser (8), de type dose individuelle conditionnée, formée d'une partie centrale souple (12) renfermant le produit à infuser (8) et d'une partie périphérique formant rebord de scellement et de rigidification, et par le fait
**que** la partie périphérique dudit conditionnement (6) fait office de moyens d'étanchéité (13) entre le demi-logement (39) du corps (2) et le demi-logement (40) de la chaudière (3) lorsque ceux-ci (39 et 40) se rapprochent.

4. Machine selon l'une quelconque des revendications 1 à 3, **caractérisée par le fait**
**que** le corps (2) et la chaudière (3) sont munis chacun d'une plaque faisant office de filtre (14, 15 ; 35, 36) au niveau de leurs demi-logements (39 et 40) respectifs ; ces filtres (14, 15 ; 35, 36) ont une forme qui permet d'enserrer partiellement ou en totalité la partie centrale (12) du conditionnement (6), lorsque la chambre d'infusion (38) est formée.

5. Machine selon l'une quelconque des revendications 1 à 4 qui comporte des moyens de mouillage (7) situés au niveau du corps (2) vers le demi-logement (39) **caractérisée par le fait**
**que** les moyens de mouillage (7) sont formés par :
- le filtre (14, 35) du demi-logement (39) du corps (2), et
- une membrane-clapet (17) placée dans l'espace compris entre ledit demi-logement (39) du corps (2) et ledit filtre (14,35).

6. Machine selon la revendication 5, **caractérisée par le fait**
**que** le filtre (14, 35) du corps (2) est percé transversalement d'au moins un trou (16) et comporte, contre sa face orientée en direction dudit corps (2), la membrane-clapet (17) dont la concavité forme un espace (18) délimité par ledit filtre (14, 35), l'ensemble des trous (16) débouchant dans cet espace (18).

7. Machine selon l'une quelconque des revendications 5 ou 6, **caractérisée par le fait**
**que** la membrane-clapet (17) est mobile entre deux positions, l'une concave empêchant le passage du liquide infusé (19), et l'autre plane permettant le passage dudit liquide infusé (19) selon la pression qui lui est appliquée.

8. Machine selon l'une quelconque des revendications 1 à 5, **caractérisée par le fait**
**que** le demi-logement (39) du corps (2) est muni d'un conduit d'évacuation (20) du liquide infusé (19) dont l'orifice est disposé entre ledit demi-logement (39) et la membrane-clapet (17).

9. Machine selon l'une quelconque des revendications 1 à 8, **caractérisée par le fait**
**que** l'élément escamotable (11) est une butée formant, en position déployée, les moyens de réception (4), et, en position escamotée, les moyens d'éjection automatique (4) par simple gravité du conditionnement (6), l'élément (11) étant monté sur un axe guidé (22), à l'encontre d'un ressort de rappel (23), et
**que** l'extrémité libre de l'axe guidé (22) coopère avec une came de commande (24) montée à l'encontre d'un ressort (25).

10. Machine selon la revendication 1, **caractérisée par le fait**
**que** les moyens de maintien en position (5) du conditionnement (6) sont solidaires d'au moins un axe (29), monté à l'encontre d'un ressort (30), ledit ressort (30) maintient les moyens de maintien en position (5) à mi-distance du corps (2) et de la chaudière (3), de manière à décoller ledit conditionnement lorsque l'écartement entre ledit corps (2) et ladite chaudière (3) est maximum.

11. Machine selon l'une quelconque des revendications 1 à 6, 8 ou 10, dans laquelle un piston fixe (1) est présent, le corps (2) étant mobile par rapport au piston fixe (1), **caractérisée par le fait**
**que** le corps (2) possède un conduit d'entrée et de sortie (21) d'eau débouchant dans la chambre (27), de sorte que le groupe formé par le corps (2) et le piston fixe (1) forme un vérin simple effet qui diminue ou augmente le volume de la chambre (27) par la sortie ou l'entrée d'eau via le conduit (21), ce qui éloigne ou rapproche horizontalement le corps (2) de la chaudière (3).

12. Machine selon les revendications 9 et 11, **caractérisée par le fait**
**que** le piston fixe (1) est muni d'une butée (26) qui coopère avec la came de commande (24) lorsque la chambre (27) est minimum, de sorte que les moyens de réception (4) sont armés et les moyens d'éjection automatique (4) sont désarmés, c'est-à-dire que la butée escamotable (11) prend une position déployée permettant la réception d'un nouveau conditionnement (6).

13. Machine selon l'une quelconque des revendications 1 à 12, **caractérisée par le fait**
**que** la chaudière (3) est munie d'une butée (28) qui sert de butoir aux moyens de réception (4), lorsque le corps (2) et la chaudière (3) se 'rapprochent de sorte que lesdits moyens de réception (4) sont désarmés et les moyens d'éjection automatique (4) sont armés, c'est-à-dire que la butée escamotable (11) prend une position escamotée.

14. Machine selon l'une quelconque des revendications 1 à 5 ou 8, **caractérisée par le fait**
**que** le demi-logement (39) du corps (2) et/ou le demi-logement (40) de la chaudière (3) sont pourvus d'un élément souple (31), qui absorbe les variations de volume du conditionnement (6).

15. Machine selon l'une quelconque des revendications 1 à 6, 10, 12,13 ou 14, **caractérisée par le fait**
**que** le corps (2) et la chaudière (3) sont disposés selon un axe longitudinal sensiblement horizontal.

16. Machine automatique selon les revendications 1 et 13 en combinaison avec l'une des revendications 2 à 6, 8, 10 à 13, **caractérisée par le fait**
**que** le corps (2) ou la chaudière (3) est équipé d'une butée mobile (32) en rotation selon au moins un axe (41) sensiblement horizontal et perpendiculaire à l'axe longitudinal de l'ensemble corps (2)-chaudière (3) ; la butée (32) est située au niveau de la chambre d'infusion (38) et est mobile entre :
- une position dans le plan de ladite chambre (38), la butée (32) faisant office de moyens de réception du conditionnement(6), et
- une position hors du plan de la chambre d'infusion (38), ladite butée (32) faisant alors office de moyens d'éjection dudit conditionnement (6).

17. Machine selon la revendication 16, **caractérisée par le fait**
**que** la butée (32) est constituée d'un étrier (32) qui comprend deux montants latéraux (42) sensiblement verticaux qui coopèrent chacun avec un axe d'articulation (41), et qui sont reliés l'un à l'autre par une traverse (43) qui réceptionne le conditionnement (6) lorsque la butée (32) est dans le plan de la chambre d'infusion (38).

18. Machine selon l'une quelconque des revendications 16 ou 17, **caractérisée par le fait**
**que** les moyens de maintien en position (5) d'un conditionnement (6) sont présents au niveau de la butée (32) et guident sensiblement verticalement du haut vers le bas ledit conditionnement (6).

19. Machine selon l'une quelconque des revendications 16,17, 18, **caractérisée par le fait**
**que** la butée (32) comporte au moins une came de commande (44) qui coopère avec le corps (2) ou la chaudière (3) lorsque ceux-ci se rapprochent l'un de l'autre, la came de commande (44) commandant la butée (32) lors du mouvement de la position dans le plan à la position hors du plan de la chambre d'infusion (38), le mouvement inverse s'effectuant par simple gravité lorsque ledit corps (2) et ladite chaudière (3) s'éloignent l'un de l'autre.

20. Machine selon l'une quelconque des revendications 16, 17 ou 19, **caractérisée par le fait**
**que** la butée (32) comporte au moins une patte (45) porteuse d'une cale (46) qui coopère avec le corps (2) ou la chaudière (3), lors de l'éloignement dudit corps (2) et de ladite chaudière (3), ce qui retarde le retour automatique de la butée (32) en position dans le plan de la chambre d'infusion (38) et facilite l'éjection du conditionnement (6).

21. Machine selon la revendication 20, **caractérisée par le fait**
**que** l'extrémité libre de la cale (46) est de biais, et
**que** le corps (2) ou la chaudière (3) de la machine est muni d'une aile-biaisée (47),
les parties biaisées de ladite cale (46) et de l'aile (47) coopèrent pour faciliter le passage de la butée(32) dans la position hors du plan de la chambre d'infusion (38), et pour empêcher le passage de la butée (32) dans la position dans ledit plan.

22. Machine selon l'une quelconque des revendications 16, 17 ou 20, **caractérisée par le fait**
**qu'**un volet (48) est mobile en rotation, selon au moins un axe (41) sensiblement horizontal perpendiculaire à l'axe longitudinal de la machine, entre une position dans le plan de la chambre d'infusion (38), interdisant l'introduction d'un nouveau conditionnement (6), et une position hors du plan permettant l'introduction du nouveau conditionnement (6).

23. Machine selon les revendications 16 et 22, **caractérisée par le fait**
**que** l'axe de rotation (41) de la butée (32) et l'axe de rotation (41) du volet (48) sont coaxiaux.

24. Machine selon l'une quelconque des revendications 16, 19 ou 21, **caractérisée par le fait**
**que** le corps (2) est amovible par rapport à la chaudière (3).

25. Machine selon la revendication 1, **caractérisée par le fait**
**qu'**elle comporte deux filtres (35, 36) montés pivotant à l'encontre de ressorts (37), facilitant le décollement du conditionnement (6) usagé.

## Patentansprüche

1. Automatische Kaffeemaschine zum Brühen von heißen Getränken wie zum Beispiel Kaffee, die eine Baugruppe enthält, bestehend aus einem Körper (2), der einem Wasserkessel (3) gegenüber angeordnet ist, wobei beide Komponenten (2), (3) sich einander annähern sollen, um eine Brühkammer (38) zu bilden, die **dadurch gekennzeichnet ist, daß** sie zwischen dem Körper (2) und dem Wasserkessel (3) auf Ebene der Brühkammer (38) folgende Elemente besitzt:
- automatische Aufnahme- und Auswurf-Vorrichtungen (4) einer individuellen Verpackungseinheit (6) mit dem zu brühenden Produkt (8), welche aus mindestens einem ausfahrbaren Element (11) bestehen, das in ausgefahrener Stellung eine Position im wesentlichen unter der Brühkammer (38) einnimmt und die genannte Verpackungseinheit (6) zwischen dem Körper (2) und dem Wasserkessel (3) bei der Aufnahme zeitlich begrenzt festhalten soll und weggefahren wird, um die individuelle Verpackungseinheit (6) passieren zu lassen und das Auswerfen der individuellen Verpackungseinheit (6) durch Schwerkraftwirkung zu ermöglichen, wobei die Bewegungsrichtung der individuellen Verpackungseinheit (6) senkrecht zur Maschinenrichtung liegt,
- Haltevorrichtungen (5), die zwei seitlich angeordnete Nuten (10) zum Positionieren der Verpackungseinheit (6) besitzen, die im wesentlichen senkrecht angeordnet sind und in denen die Verpackungseinheit (6) gleitet und in senkrechter Position gehalten wird, wenn die Aufnahme- und Auswurfvorrichtungen (4) präsent sind.

2. Maschine gemäß Patentanspruch 1 oder 2, **gekennzeichnet dadurch,**
- **daß** die Brühkammer (38) aus zwei Hälften (39), (40) einer Aufnahmeöffnung besteht, wobei die eine (39) von einer Seite des Körpers (2), die andere (40) von einer Seite des Wasserkessels (3) getragen wird und beide Seiten sich gegenüber liegen, so daß die genannte Brühkammer (38) gebildet wird, wenn sich die beiden Hälften (39), (40) der Aufnahmeöffnung aneinanderlegen und
- **daß** die Dichtmittel (13) von der individuellen Verpackungseinheit (6) getragen werden, die das zu brühende Produkt (8) enthält, so daß, wenn die Brühkammer (38) gebildet ist, die individuelle Verpackungseinheit (6) zwischen den beiden Hälften (39), (40) der Aufnahmeöffnung eingeschlossen ist.

3. Maschine gemäß Patentanspruch 2, **gekennzeichnet dadurch, daß** sie Verpackungseinheiten (6) mit dem zu brühenden Produkt (8) in Form einer individuellen Kapsel verwendet, die aus einem flexiblen, das zu brühende Produkt (8) enthaltenden, mittleren Teil (12) und einer zur Versteifung und zum Verschließen dienenden Randpartie besteht, sowie dadurch, daß die Randpartie der genannten Verpackungseinheit (6) als Dichtmittel (13) zwischen der auf Seite des Körpers (2) angeordneten Hälfte (39) der Aufnahmeöffnung und der auf Seite des Wasserkessels (3) angeordneten Hälfte (40) der Aufnahmeöffnung dient, wenn beide Hälften (39), (40) einander angenähert sind.

4. Maschine gemäß einem der vorstehenden Ansprüche 1 bis 3, **gekennzeichnet dadurch, daß** die Hälften (39), (40) der Aufnahmeöffnung auf Seiten des Körpers (2) und auf Seiten des Wasserkessels (3) mit je einer Platte versehen sind, die als Filter dient (14, 15; 35, 36), wobei diese Filter (14, 15; 35, 36) eine Form haben, die das teilweise oder komplette Einschließen des mittleren Teils (12) der Verpackungseinheit (6) gestattet, wenn die Brühkammer (38) gebildet ist.

5. Maschine gemäß einem der vorstehenden Ansprüche 1 bis 4, die auf Seite des Körpers (2) gegen die Hälfte (39) der Aufnahmeöffnung gerichtete Benetzungsmittel (7) besitzt und **gekennzeichnet ist dadurch**, daß diese Benetzungsmittel (7) gebildet werden aus :
- dem Filter (14), (35) der Hälfte (39) der Aufnahmeöffnung des Körpers (2) und
- einer Ventilmembran (17), die in dem Raum zwischen der Hälfte der Aufnahmeöffnung (39) des Körpers (2) und dem genannten Filter (14, 35) angeordnet ist.

6. Maschine gemäß Anspruch 5, **gekennzeichnet dadurch, daß** der Filter (14), (35) des Körpers (2) mit mindestens einer quer liegenden Bohrung (16) versehen ist und auf seiner in Richtung Körper (2) liegenden Seite eine Ventilmembran (17) besitzt, die konkav ist und dadurch einen Raum (18) bildet, der durch den genannten Filter (14), (35) begrenzt wird, wobei alle Bohrungen (16) in diesen Raum (18) münden.

7. Maschine gemäß einem der vorstehenden Ansprüche 5 oder 6, **gekennzeichnet dadurch, daß** die Ventilmembran (17) sich zwischen zwei Stellungen bewegen kann, einer konkaven, die den Durchfluss der gebrühten Flüssigkeit (19) verhindert und einer ebenen, die den Durchfluss der gebrühten Flüssigkeit (19) gestattet, je nachdem, welcher Druck auf sie aufgebracht wird.

8. Maschine gemäß einem der vorstehenden Ansprüche 1 bis 5, **gekennzeichnet dadurch, daß** die Hälfte (39) der Aufnahmeöffnung des Körpers (2) mit einer Ableitung (20) für die gebrühte Flüssigkeit (19) versehen ist, deren Öffnung zwischen der genannten Hälfte (39) der Aufnahmeöffnung und der Ventilmembran (17) angeordnet ist.

9. Maschine gemäß einem der Ansprüche 1 bis 8, **gekennzeichnet dadurch,**
- **daß** das ausfahrbare Element (11) ein Anschlag ist, der in ausgefahrener Stellung die Aufnahmevorrichtungen (4) und in eingefahrener Stellung die automatischen Auswurfvorrichtungen (4) zum Auswerfen der Verpackungseinheit (6) durch reine Schwerkraftwirkung darstellt, wobei das Element (11) auf einer Führungswelle (22) mit Rückholfeder (23) montiert ist und
- **daß** das freie Ende der Führungswelle (22) mit einem Betätigungsnocken (24) zusammenwirkt, der gegen die Rückholfeder (25) montiert ist.

10. Maschine gemäß Anspruch 1, **gekennzeichnet dadurch, daß** die Haltevorrichtungen (5) der Verpackungseinheit (6) mit mindestens einem Stift (29) mit Rückholfeder (30) fest verbunden sind, wobei die Feder (30) die Haltevorrichtungen (5) auf halber Entfernung zwischen dem Körper (2) und dem Wasserkessel (3) festhält, so daß die genannte Verpackungseinheit abgelöst wird, wenn der Abstand zwischen dem genannten Körper (2) und dem genannten Wasserkessel (3) maximal ist.

11. Maschine gemäß einem der Ansprüche 1 bis 6, 8 oder 10, bei der ein feststehender Kolben (1) vorhanden ist und der Körper (2) gegenüber diesem feststehenden Kolben (1) beweglich ist, **gekennzeichnet dadurch, daß** der Körper (2) eine Wasserzu- und -ableitung (21) besitzt, die in die Kammer (27) mündet, so daß die Baugruppe bestehend aus dem Körper (2) und dem feststehenden Kolben (1) einen einfachwirkenden Zylinder bildet, der das Volumen der Kammer (27) aufgrund des durch die Leitung (21) ein- oder ausströmenden Wassers verkleinert oder vergrößert, wodurch der Körper (2) vom Wasserkessel (3) in horizontaler Richtung weggefahren oder angenähert wird.

12. Maschine gemäß Anspruch 9 und 11, **gekennzeichnet dadurch, daß** der feststehende Kolben (1) mit einem Anschlag (26) versehen ist, der mit dem Steuernocken (24) zusammenwirkt, wenn die Kammer (27) am kleinsten ist, so daß die Aufnahmevorrichtungen (4) in Bereitschaft sind und die automatischen Auswurfvorrichtungen (4) nicht in Bereitschaft sind, d.h. daß der ausfahrbare Anschlag (11) eine ausgefahrene Stellung einnimmt, welche die Aufnahme einer neuen Verpackungseinheit (6) gestattet.

13. Maschine gemäß einem der Ansprüche 1 bis 12, **gekennzeichnet dadurch, daß** der Wasserkessel (3) mit einem Anschlag (28) versehen ist, der als Anlauf für die Aufnahmevorrichtung (4) dient, wenn der Körper (2) und der Wasserkessel (3) sich einander annähern, so daß die genannten Aufnahmevorrichtungen (4) nicht in Bereitschaft sind und die automatischen Auswurfvorrichtungen (4) in Bereitschaft sind, d.h. daß der ausfahrbare Anschlag (11) die ausgefahrene Stellung einnimmt.

14. Maschine gemäß einem der Ansprüche 1 bis 5 oder 8, **gekennzeichnet dadurch, daß** die Hälfte (39) der Aufnahmeöffnung des Körpers (2) und/oder die Hälfte (40) der Aufnahmeöffnung des Wasserkessels (3) mit einem weichen Element (31) versehen sind, das die Volumenschwankungen der Verpackungseinheit (6) ausgleicht.

15. Maschine gemäß einem der Ansprüche 1 bis 6, 10, 12, 13 oder 14, **gekennzeichnet dadurch, daß** der Körper (2) und der Wasserkessel (3) auf einer praktisch horizontal liegenden Längsachse angeordnet sind.

16. Automatische Maschine gemäß Anspruch 1 und 13, kombiniert mit einem der Ansprüche 2 bis 6, 8, 10 bis 13, **gekennzeichnet dadurch, daß** der Körper (2) oder der Wasserkessel (3) mit einem drehbar gelagerten Anschlag (32) auf mindestens einer Achse (41) versehen sind, die praktisch horizontal verläuft und senkrecht zur Längsachse der Baugruppe Körper (2), Wasserkessel (3) steht, wobei der Anschlag (32), der auf Ebene der Brühkammer (38) angeordnet ist, sich bewegen kann zwischen :
- einer Stellung in der Ebene der genannten Kammer (38), in welcher der Anschlag (32) die Aufnahmevorrichtungen für die Verpackungseinheit (6) darstellt, und
- einer Stellung außerhalb der Ebene der Brühkammer (38), in welcher der Anschlag (32) die Auswurfvorrichtungen der genannten Verpackungseinheit (6) darstellt.

17. Maschine gemäß Anspruch 15, **gekennzeichnet dadurch, daß** der Anschlag (32) aus einem Bügel (32) besteht, der zwei annähernd senkrechte seitliche Wangen (42) besitzt, die jede mit einer Gelenkachse (41) zusammenwirken und durch einen Steg (43) miteinander verbunden sind, der die Verpackungseinheit (6) aufnimmt, wenn sich der Anschlag (32) in der Ebene der Brühkammer (38) befindet.

18. Maschine gemäß einem der Ansprüche 16 oder 17, **gekennzeichnet dadurch, daß** die Haltevorrichtungen (5) für eine Verpackungseinheit (6) auf Ebene des Anschlags (32) vorhanden sind und die genannte Verpackungseinheit (6) in praktisch senkrechter Richtung von oben nach unten führen.

19. Maschine gemäß einem der Ansprüche 16, 17, 18, **gekennzeichnet dadurch, daß** der Anschlag (32) mindestens einen Steuernocken (44) besitzt, der mit dem Körper (2) oder dem Wasserkessel (3) zusammenwirkt, wenn diese sich einander annähern, wobei der Steuernocken (44) den Anschlag (32) bei seiner Bewegung von der Stellung in der Ebene in die Stellung außerhalb der Ebene der Brühkammer (38) steuert, wobei die umgekehrte Bewegung durch reine Schwerkraftwirkung ausgeführt wird, wenn der genannte Körper (2) und der genannte Wasserkessel (3) sich voneinander entfernen.

20. Maschine gemäß einem der Ansprüche 16, 17 oder 19, **gekennzeichnet dadurch, daß** der Anschlag (32) mindestens einen Lappen (45) mit einer Beilage (46) besitzt, die mit dem Körper (2) oder dem Wasserkessel (3) zusammenwirkt, wenn sich der genannte Körper (2) und der genannte Wasserkessel (3) voneinander entfernen, was die automatische Rückkehr des Anschlags (32) in die Stellung in der Ebene der Brühkammer (38) verzögert und das Auswerfen der Verpackungseinheit (6) erleichtert.

21. Maschine gemäß Anspruch 20, **gekennzeichnet dadurch, daß** das freie Ende der Beilage (46) angeschrägt ist und der Körper (2) oder der Wasserkessel (3) der Maschine mit einem angeschrägten Flügel (47) versehen sind, so daß die angeschrägten Teile der genannte Beilage (46) und des Flügels (47) zusammenwirken, um die Bewegung des Anschlags (32) in die Stellung außerhalb der Ebene der Brühkammer (38) zu erleichtern und um die Bewegung des Anschlags (32) in die Stellung in der genannten Ebene zu verhindern.

22. Maschine gemäß einem der Ansprüche 16, 17 oder 20, **gekennzeichnet dadurch, daß** eine Klappe (48) um mindestens eine praktisch horizontal liegende und zur Längsachse der Maschine senkrecht stehende Achse (41) drehbar gelagert ist, und zwar zwischen einer Stellung in der Ebene der Brühkammer (38), in welcher das Einführen einer neuen Verpackungseinheit (6) nicht möglich ist, und einer Stellung außerhalb der Ebene, in welcher das Einführen einer neuen Verpackungseinheit (6) möglich ist.

23. Maschine gemäß Anspruch 16 und 22, **gekennzeichnet dadurch, daß** die Drehachse (41) des Anschlags (32) und die Drehachse (41) der Klappe (48) koaxial angeordnet sind.

24. Maschine gemäß einem der Ansprüche 16, 19 oder 21, **gekennzeichnet dadurch, daß** der Körper (2) in bezug auf den Wasserkessel (3) abnehmbar ist.

25. Maschine gemäß Anspruch 1, **gekennzeichnet dadurch, daß** sie zwei Filter (35), (36) besitzt, die schwenkbar gegen die Federn (37) gelagert sind und das Ablösen der Verpackungseinheit (6) nach Gebrauch erleichtem.

## Claims

1. Automatic machine for preparing hot drink infusions such as coffee which includes an assembly formed of a body (2) placed opposite a boiler (3), designed to be moved one (2) closer to the other (3) to form an infusion chamber (38), **characterised in that**
it includes, between body (2) and boiler (3), at the level of infusion chamber (38)
- means for receiving and automatic ejection (4) of individual packaging (6) containing the product to be infused (8), which consists of at least one retractable element (11), deployed in a position roughly beneath infusion chamber (38), so that it temporarily immobilises the aforementioned packaging (6) between body (2) and boiler (3) when receiving the package and retracted on the passage of individual packaging (6) to allow ejection by gravity of individual packaging (6), the movement of individual packaging (6) being perpendicular to the machine axis,
- means for holding the packaging in position (5) which consist of two roughly vertical side grooves (10) in which the aforementioned packaging slides and is maintained vertical by the presence of the reception and automatic ejection means (4),

2. Machine according to claim 1 or 2, **characterised in that**
infusion chamber (38) is formed of a housing in two halves (39 and 40), one (39) supported on a side of body (2), the other (40) supported on a side of boiler (3), these two sides are opposite one another; the aforementioned infusion chamber (38) being formed when the two half housings (39 and 40) are side by side, and
there are sealing features (13) on individual packaging (6) of product to be infused (8) so that, when infusion chamber (38) is formed, individual packaging (6) inserts between two half-housings (39 and 40).

3. Machine according to claim 2, **characterised in that** it uses individual dose type packaging (6) of the product to be infused (8), formed of a central soft part (12) enclosing the product to be infused (8) and a peripheral part forming a sealing and rigidifying edge, and **in that**
the peripheral part of the said packaging (6) forms a seal (13) between body (2) half-housing (39) and boiler (3) half-housing (40) when these two halves (39 and 40) come together.

4. Machine according to any one of the claims 1 to 3, **characterised in that**
body (2) and boiler (3) are each equipped with a plate acting as filter (14, 15; 35, 36) at their respective half-housing (39 and 40); these filters (14, 15; 35, 36) have a shape that allows part or total insertion of central part (12) of packaging (6), when the infusion chamber (38) is formed.

5. Machine according to any one of claims 1 to 4 which includes wetting means (7) at the body (2) towards half-housing (39) **characterised in that** that wetting means (7) are formed by
- filter (14, 35) of the body (2) half-housing (39), and
- a membrane valve (17) placed in the space between
said body (2) half-housing (39) and said filter (14, 35)

6. Machine according to the claim 5, **characterised in that** at least one hole (16) is drilled through filter (14, 35) of body (2) and includes, against its side oriented in the direction of said body (2), membrane valve (17) whose concavity forms a space (18) limited by said filter (14, 35), all holes (16) exiting into this space (18).

7. Machine according to any one of claims 5 or 6, **characterised in that**
membrane valve (17) is mobile between two positions, a concave position preventing the passage of infused liquid (19), and another flat position allowing the passage of the said infused liquid (19) according to the pressure applied to it.

8. Machine according to any one of claims 1 at 5, **characterised in that**
the body (2) half-housing (39) is fitted with a pipe (20) discharging the infused liquid (19), the orifice of which is installed between said half-housing (39) and membrane valve (17).

9. Machine according to any one of claims 1 at 8, **characterised in that**
retractable part (11) is a stop which in the deployed position forms means (4) for receiving, and, in the folded position, means (4) for automatic gravity ejection of packaging (6), part (11) being fitted on a guided pin (22), against a return spring (23), and that guided pin (22) free end acts with a control cam (24) fitted against a spring (25).

10. Machine according to claim 1, **characterised in that**
the means for holding packaging (6) in position (5) are joined to at least one pin (29), fitted against a spring (30), said spring (30) maintaining the means for holding in position (5) mid-way between body (2) and boiler (3), so as to loosen said packaging when the distance between said body (2) and said boiler (3) is maximum.

11. Machine according to any one of the claims 1 to 6, 8 or 10, in which a fixed piston (1) is present, body (2) being mobile in relation to fixed piston (1), **characterised in that** body (2) has an input and output water pipe (21) connecting with chamber (27), so that the group formed by body (2) and the fixed piston (1) forms a single-acting cylinder which increases or decreases the volume of chamber (27) by the effect of water incoming or outgoing via the pipe (21), this horizontally increasing or decreasing the distance of body (2) from boiler (3).

12. Machine according to claims 9 and 11, **characterised in that**
fixed piston (1) is equipped with a stop (26) which acts with control cam (24) when chamber (27) is minimised, so that means of reception (4) are activated and means of automatic ejection (4) are deactivated, that is to say that retractable stop (11) takes up a deployed position ready to receive new packaging (6).

13. Machine according to any one of claims 1 to 12, **characterised in that**
boiler (3) is fitted with a stop (28) which acts on the means of reception (4), when body (2) and boiler (3) move together so that said means of acceptance (4) are deactivated and means of automatic ejection (4) are activated, that is to say retractable stop (11) adopts a retracted position.

14. Machine according to any one of the claims 1 to 5 or 8, **characterised in that**
body (2) half-housing (39) and/or boiler (3) half-housing (40) are provided with a flexible element (31), which absorbs the variations in the volume of packaging (6).

15. Machine according to any one of claims 1 to 6, 10, 12, 13 or 14, **characterised in that**
body (2) and boiler (3) are arranged according to a roughly horizontal longitudinal axis.

16. Automatic machine according to claims 1 and 13 in combination with one of claims 2 to 6, 8, 10 to 13, **characterised in that** body (2) or boiler (3) is equipped with a mobile stop (32) which rotates on at least one axis (41) roughly horizontal and perpendicular to the horizontal axis of body(2)-boiler (3) assembly; stop (32) is placed at the level of the infusion chamber (38) and is mobile between
- a position in the plane of aforementioned chamber (38), stop (32) acting as means for receiving packaging (6), and
- a position outside the plane of infusion chamber (38), aforementioned stop (32) then acting as means for ejecting said packaging (6).

17. Machine according to claim 16, **characterised in that**
stop (32) consists of a stirrup (32) which includes two roughly vertical lateral uprights (42) which act each one with a hinge pin (41), and which are connected to one another by a cross-member (43) which receives packaging (6) when stop (32) is in the plane of infusion chamber (38).

18. Machine according to any one of claims 16 or 17, **characterised in that**
the means for holding packaging (6) in position (5) exist at stop (32) and act to roughly guide packaging (6) downwards.

19. Machine according to any one of the claims 16, 17, 18, **characterised in that**
stop (32) includes at least one control cam (44) which acts with body (2) or boiler (3) when these move closer together to control stop (32) during its movement from the position in the plane to the position outside the plane of infusion chamber (38), the opposite movement taking place by force of gravity when said body (2) and aforementioned boiler (3) move apart.

20. Machine according to any one of claims 16 or 17, **characterised in that**
stop (32) includes at least one arm (45) carrying a spacer (46) which acts with body (2) or boiler (3) when moving away from said body (2) and aforementioned boiler (3), which delays the automatic return of stop (32) to a position in the plane of infusion chamber (38) and facilitates the ejection of packaging (6).

21. Machine according to claim 20, **characterised in that**
the free end of spacer (46) is oblique, and body (2) or boiler (3) of the machine is equipped with an oblique wing (47), the oblique parts of the aforementioned spacer (46) and wing (47) act together to facilitate the passage of stop (32) in the position outside the plane of infusion chamber (38), and to prevent the passage of stop (32) in the position in said plane.

22. Machine according to any one of claims 16 or 17, **characterised in that**
shutter (48) is mobile in rotation, on at least one axis (41) that is roughly horizontal perpendicular to the longitudinal axis of the machine, between a position in the plane of infusion chamber (38), preventing the introduction of new packaging (6), and a position outside the plane allowing the introduction of new packaging (6).

23. Machine according to claims 16 and 22, **characterised in that**
rotational axis (41) of stop (32) and rotational axis (41) of shutter (48) are coaxial.

24. Machine according to any one of claims 16 or 17, **characterised in that**
body (2) is removable relative to boiler (3).

25. Machine according to claim 1, **characterised in that**
it includes two filters (35, 36) fitted to pivot against springs (37), to facilitate loosening of worn packaging (6).
